# EUROPÄISCHE PATENTSCHRIFT

(11) **EP 2 633 530 B1**
(45) Veröffentlichungstag und Bekanntmachung des Hinweises auf die Patenterteilung: **10.09.2014**
(21) Anmeldenummer: 11773235.4
(22) Anmeldetag: 17.10.2011
(51) Int. Cl.: H01T 4/06, H01T 4/08, H02H 3/20, H01C 7/12

(54) **ANORDNUNG ZUR AUSBILDUNG EINER THERMISCHEN TRENNSTELLE**
ARRANGEMENT FOR FORMING A THERMAL ISOLATION POINT
AGENCEMENT POUR LA CONSTITUTION D'UNE ZONE DE SÉPARATION THERMIQUE

(30) Priorität: 04.05.2011 DE 102011100437; 29.10.2010 DE 102010050083
(43) Veröffentlichungstag der Anmeldung: 04.09.2013
(73) Patentinhaber: Dehn + Söhne GmbH + Co. KG, 92318 Neumarkt/Opf. (DE)
(72) Erfinder: ZÄUNER, Edmund, 92334 Berching/Pollanten (DE); WITTMANN, Georg, 92283 Lauterhofen (DE)
(74) Vertreter: Kruspig, Volkmar
(86) Internationale Anmeldenummer: PCT/EP2011/068113
(87) Internationale Veröffentlichungsnummer: WO 2012/055720

(56) Entgegenhaltungen:
- WO-A1-2006/045946
- WO-A1-2007/105066

## Beschreibung

Die Erfindung betrifft eine Anordnung zur Ausbildung einer thermischen Trennstelle, bestehend aus einem Abtrennstreifen, welcher mit einer Vorspannkraft beaufschlagbar ist, einem thermische Energie erzeugenden, elektrischen Mittel mit einer Kontaktfläche, insbesondere ausgebildet als Überspannungsschutzelement oder als Bestandteil eines solchen Elements sowie einem, sich bei definierter Erwärmung im Aggregatzustand ändernden stoffflüssigen Verbindungsmittel, insbesondere einem Lot gemäß Oberbegriff des Patentanspruchs 1.

Aus der DE 20 2007 006 934 U1 ist ein steckbarer Überspannungsableiter mit einem Gehäuse zur Aufnahme eines Ableiterelements vorbekannt. Zwischen einem Anschlussableiterelement und dem zugehörigen Verbinder ist eine thermische, unter Federvorspannung stehende Lot-Trennstelle ausgebildet. Weiterhin ist ein auf die Lottrennstelle einwirkender, die Vorspannkraft überragender Abtrennbock mit einer Zustandsanzeige vorhanden.

Eine der leitfähigen Verbindungen umfasst eine Schaltzunge, deren Zungenende in die Lotkontaktstelle übergeht. Die Schaltzunge weist eine stromsensitive Soll-Trennstelle auf, und besitzt selbst stroinsensitive Eigenschaften.

Bei dieser Lösung des Standes der Technik steht der Verbinder, der quasi einen Abtrennstreifen darstellt, unmittelbar über der Lötverbindung, d. h. stoffschlüssig mit einem Außenanschluss einer vorgegebenen Strecke in Verbindung. Der Lötvorgang kann daher erst nach Montage des eigentlichen Überspannungsableiters im jeweiligen Steckteil ausgebildet werden und zwar unabhängig davon, dass zwischen der Lotkontaktstelle und dem Überspannungsableiterelement noch eine wärmeleitfähigen Koppelplatte befindlich ist, welche den erwähnten Lotfortsatz aufweist. Es gelingt zwar bei dieser Lösung des Standes der Technik die Lötverbindung mit einer nur geringen Lotmenge auszuführen, jedoch ist eine in einem getrennten Vorab-Arbeitsgang auszuführende Lotverbindung zwischen Schaltzunge und Koppelplatte nicht möglich. Darüber hinaus besitzt die Koppelplatte eine recht große Wärmekapazität, die insofern nach-teilig ist, als dass es beim Lötvorgang zu einer Überhitzung des Lotes kommt mit der Folge einer Verschlechterung der elektrischen und mechanischen Eigenschaften des Lotes selbst bzw. der mit dem Lot realisierten stoffschlüssigen Verbindung.

Bei dem Überspannungsschutzgerät mit thermischer Abgrenzvorrichtung nach DE 10 2008 026 555 A1 werden als Überspannungsschutzelemente scheibenförmige Varistoren eingesetzt, wobei jedem Ableitpfad mindestens ein Varistor zugeordnet ist und die thermischen Trennstellen in Reihe zum jeweiligen Varistor liegen.

Die thermischen Trennstellen umfassen jeweils einen federvorgespannten Bügel, welcher mit einem niedrigschmelzenden Lot elektrisch und mechanisch mit dem jeweiligen Varistor verbunden ist. Die federvorgespannten Bügel sind durch ein Stant-Blegetell gebildet, welches, ausgehend von einem gemeinsamen Verbindungsschenkel, fingerartige Fortsätze aufweist. Am Verbindungsschenkel ist mindestens ein Steckanschluss vorgesehen. Die fingerartigen Fortsätze besitzen im Bereich ihres freien Endes eine schlitzförmige Ausnehmung, in welche jeweils unmittelbar ein Anschlussdraht und ein Anschlussbein eines Varistors verlötet werden kann.

Auch bei dieser Ausführungsform des Standes der Technik müssen zum Ausführen der stoffschlüssigen Verbindungen zwischen dem Varistor und dem Schenkel zunächst die scheibenförmigen Varistoren in die entsprechenden Aufnahmekammern eingesteckt werden, die sich im Gerätegehäuse befinden.

Bei der Abtrennvorrichtung für steckbare Überspannungsableiter nach DE 10 2006 042 028 B3 ist die Abtrennstelle ebenfalls als thermisch auslösbare Lotverbindung ausgeführt und zwar zwischen einem äußeren Anschlusskontakt des Ableiters und einem Anschlusspunkt des mindestens einem Ableiterelements. Weiter wirkt auf die Lotverbindung eine Vorspannkraft in Trennrichtung.

Nach der dortigen Lösung ist ein äußerer Anschlusskontakt als metallisches Formteil ausgeführt, welches einen integralen Verlängerungsschenkel aufweist, dessen zur Lotverbindung weisendes Ende eine U-Form besitzt. Weiterhin ist der Anschlusspunkt des Ableiterelements als Flächenstück ausgeführt, welches in Anlage mit einem Abschnitt des U-förmigen Endes des Formteiles stehend, mit diesem durch ein Lot gesichert ist. Das metallische Formteil steht unter Eigenfedervorspannung und greift in einen, in den von der U-Form des Formteilabschnittes geschlossenen gebildeten Raum, an der Führung gelagerten, unter Federvorspannkraft stehenden Finger ein, um beim Auslösen ein schnelles, sicheres elektrisches Trennen der Lotverbindung sowohl durch Unterstützung der Trennbewegung des Formteils als auch Verdrängen des Lotmaterials zu bewirken.

Bei diesem Stand der Technik ist die notwendige Lotverbindung ebenfalls erst nach kompletter Montage der funktionswesentlichen Elemente des steckbaren Überspannungsableiters möglich. Hierbei besteht die Gefahr, dass für den Lötvorgang notwendige Flussmittel auf diesbezüglich sensitive Bereiche des Ableiters gelangen oder dass es beim Lotvorgang zu Ablagerungen des Lotes an unerwünschten Stellen oder Bereichen kommt.

Bei dem Gebrauchsmuster DE 295 19 313 U1 wird von einem Überspannungsableiter mit einem Unterteil ausgegangen, das mit den Zu- und Ableitungen der zu schützenden Anlage elektrisch verbunden ist. Weiterhin ist ein Steckteil vorhanden, dass mindestens einen Varistor aufweist, der durch eine mechanische Steckverbindung mit dem Unterteil lösbar und dabei elektrisch verbindbar ist.

Am Steckteil ist eine thermische Auslösung für den Fall einer unzulässigen Erwärmung des Varistors vorgesehen. Das Steckteil ist mit einer Tragwand versehen, derart, dass der Varistor an einer Seitenfläche der Tragwand und die thermische Auslösung sowie zugehörige Schaltmittel an der anderen Seitenfläche der Tragwand befindlich sind, wobei die thermische Auslösung dem Varistor gegenüberliegt. Insbesondere ist das Steckteil wannenförmig ausgebildet, wobei der Boden der Wanne die vorherige Tragwand bildet.

Bei diesem Stand der Technik ist die thermische Abtrennvorrichtung nur nach Bestückung des Trägerteils verlötbar. Außerdem ist ein hoher Energieeintrag erforderlich, da der Varistor mit seiner Anschlussfahne beim Lotvorgang ebenfalls ausreichend erwärmt werden muss.

Aus dem Vorgenannten ist nach Aufgabe der Erfindung eine weiterentwickelte Anordnung zur Ausbildung einer thermischen Trennstelle anzugeben, wobei eine sehr hohe und reproduzierbare Qualität der stoffschlüssigen, insbesondere Lötverbindung zu gewährleisten ist. Weiterhin soll eine Möglichkeit geschaffen werden, die stoffschlüssige, insbesondere Lötverbindung in einem getrennten Arbeitsgang auszuführen, welcher nicht voraussetzt, dass die Abtrennstelle bereits innerhalb eines z. B. Steckteils eines Überspannungsableiters befindlich ist.

Die Lösung der Aufgabe der Erfindung erfolgt durch die Merkmalskombination nach Patentanspruch 1, wobei die Unteransprüche mindestens zweckmäßige Ausgestaltungen und Weiterbildungen beinhalten.

Es wird demnach von einer Anordnung zur Ausbildung einer thermischen Trennstelle, bestehend aus einem Abtrennstreifen ausgegangen, welche mit einer Vorspannkraft beaufschlagbar ist. Weiterhin ist ein thermische Energie erzeugendes, elektrisches Mittel mit einer Kontaktfläche, insbesondere ausgebildet als Überspannungsschutzelement oder als Bestandteil eines solchen Elements vorhanden. Funktionswesentlich ist darüber hinaus ein sich bei definierter Erwärmung im Aggregatzustand änderndes, stoffschlüssiges Verbindungsmittel, insbesondere ein Lot. Erfindungsgemäß ist zwischen dem Abtrennstreifen und der Kontaktfläche des elektrischen Mittels ein Adapterteil vorhanden, wobei das Adapterteil einerseits mit der Kontaktfläche rein form- und/oder kraftschlüssig verbindbar ist, sowie andererseits stoffschlüssig mit dem Abtrennstreifen in thermisch wiederum trennbarer Verbindung steht.

Ausgestaltend ist das Adapterteil aus einem hoch wärmeleitfähigen Material bestehend. Das Adapterteil ist bevorzugt durch Löten mit dem Abtrennstreifen verbunden und weist eine hierfür optimierte Materialzusammensetzung und/oder Lötfläche auf.

Erfindungsgemäß ist der Abtrennstreifen mit Adapterteil in einem ersten Arbeitsschritt gefertigt. Nach Herstellung der stoffschlüssigen Verbindung wird die form- und/oder kraftschlüssige Verbindung auf rein mechanische Weise in einem zweiten, getrennten Schritt realisiert.

Durch diese Maßnahme gelingt es, eine Abtrennvorrichtung für zwei eng benachbarte Varistoren zu schaffen und an diese Varistoren thermisch optimal anzukoppeln, ohne dass in dem sonst zur Verfügung stehenden engen Raum ein Lötschritt erfolgt.

Damit kann die geschaffene Abtrennvorrichtung auch innerhalb eines Überspannungsschutzmoduls positioniert werden, d.h. dort angewendet werden, wo kein Zugang für Werkzeuge, z.B. einen Lötkolben geschaffen ist. Es kann also eine optimale Positionierung im Überspannungsschutzmodul in Bezug auf das Ansprechverhalten vorgenommen werden, ohne dass auf fertigungstechnische Maßnahmen Rücksicht zu nehmen ist.

Es kann demzufolge die sowohl unter dem Aspekt der notwendigen aufzubringenden Wärmeenergie als auch entstehender Dämpfe, die flussmittelbedingt sind, kritische Behandlung an einem getrennten Ort stattfinden. Das dabei entstehende Zwischenprodukt, umfassend mindestens den erwähnten Abtrennstreifen und das Adapterteil, kann gereinigt, gegebenenfalls oberflächenbehandelt und bezogen auf die Lotverbindung geprüft für die weitere Verarbeitung vorgehalten werden.

Das Adapterteil weist erfindungsgemäß mindestens einen Crimp- oder Biegeabschnitt auf, welcher mindestens eine Anschlussfahne oder Anschlusszunge des elektrischen Mittels mechanisch aufnimmt. Das Adapterteil kann z. B. als Ein- oder Mehrfach-Flachsteckhülse ausgebildet werden.

In Weiterbildung der Erfindung weist das Adapterteil einen Stapel elektrisch verbundener Crimp- oder Biegeabschnitte auf, wobei auf einer Stapelfläche der stoffschlüssige Verbindungsbereich ausgebildet ist.

In einer nochmaligen Weiterbildung der Erfindung sind mindestens zwei in einer Ebene gegenüberliegende Crimp- oder Biegeabschnitte zur beidseitigen Aufnahme je mindestens einer Anschlussfahne oder Anschlusszunge des elektrischen Mittels vorgesehen.

Ausgestaltend kann das Adapterteil eine bezüglich der Ausbildung der stoffschlüssigen Verbindung mit dem Abtrennstreifen eine sehr geringe Wärmekapazität besitzen, so dass keine unverhältnismäßig hohe Wärmeenergie zum Schmelzen und zur Ausführung des Lötvorganges erforderlich wird.

Die Erfindung soll nachstehend anhand eines Ausführungsbeispiels sowie unter Zuhilfenahme von Figuren näher erläutert werden.

Hierbei zeigen:
- Fig. 1: eine prinzipielle Ausbildung eines Abtrennstreifens sowie ein beispielhaftes Adapterteil noch voneinander getrennt, d. h. nicht stoffschlüssig verbunden;
- Fig. 2: eine Darstellung der ausgeführten, stoffschlüssigen, insbesondere Lötverbindung zwischen dem Abtrennstreifen und der entsprechenden Lötfläche des Adapterteils;
- Fig. 3: eine Darstellung des durch Löten verbundenen Abtrennstreifens mit Adapterteil, wobei das Adapterteil als Flachsteckhülse geformt ist, um eine Anschlussfahne eines scheibenförmigen Varistors aufzunehmen;
- Fig. 4: den Zustand nach vollständigem Aufschieben der Anschlussfahne oder Anschlusszunge des Varistors bezogen auf das flachsteckhülsenartige Adapterteil;
- Fig. 5: eine Darstellung eines Adapterteils, bereits stoffschlüssig mit dem Abtrennstreifen verbunden, wobei das Adapterteil so ausgeführt wurde, dass aus der gegenüberliegenden Seite jeweils eine Anschlussfahne oder Anschlusszunge eines jeweiligen scheibenförmigen Varistors durch Aufstecken mechanisch verbunden und damit elektrisch kontaktiert werden kann;
- Fig. 6: eine Darstellung, die das Ergebnis des mechanischen Verbindungsvorgangs ausgehend von Fig. 5 zeigt;
- Fig. 7: eine Ausführungsform mit einem Mehrfach-Adapterteil, welches in der Lage ist, drei Anschlussfahnen von drei scheibenförmigen Varistoren mechanisch und damit elektrisch aufzunehmen;
- Fig. 8: eine Darstellung des mechanischen Verbindungsvorgangs ausgehend von Fig. 7;
- Fig. 9: eine weitere Darstellung ähnlich derjenigen nach Fig. 8, wobei jedoch hier eine vierte Anschlussfahne oder Anschlusszunge eines vierten Varistors in einen entsprechenden Crimp- bzw. Flachsteckhülsenbereich des Adapters eingeschoben ist.

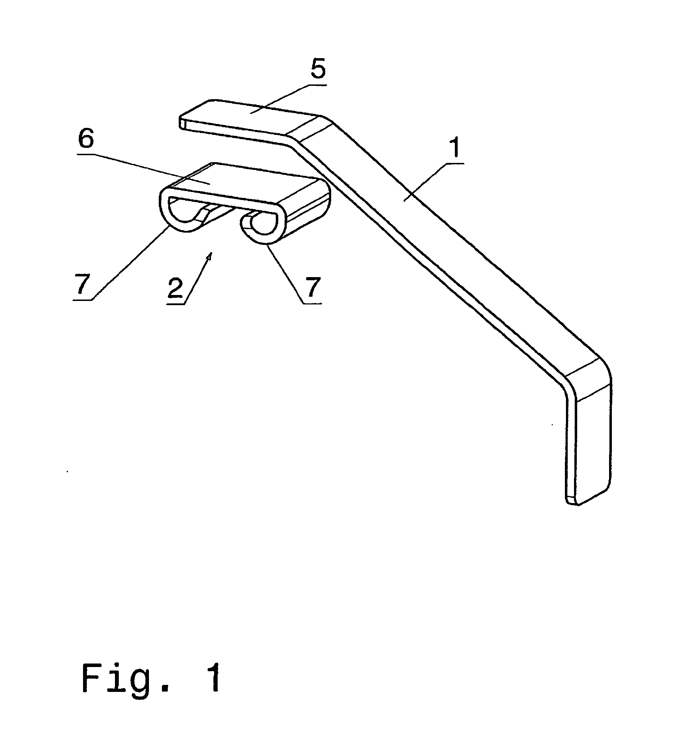

Die Darstellung nach Fig. 1 geht von einem Abtrennstreifen 1 aus, der z. B. abgewinkelt ausgeführt ist und entweder selbst federelastische Eigenschaften aufweist oder mit einer Vorspannfeder (nicht gezeigt) in Verbindung bringbar ist.

Ein Abwinklungsabschnitt 5 bildet eine Fläche zum Ausführen einer stoffschlüssigen, insbesondere Lötverbindung, die beim späteren Einsatz eine thermische Trennstelle darstellt.

Ein erfindungsgemäßes Adapterteil 2 weist ebenfalls eine stoffschlüssige Verbindungsfläche 6 auf, die zum Zweck des Ausführens der Lötverbindung zur Fläche 5 des Abtrennstreifens 1 hin gerichtet ist.

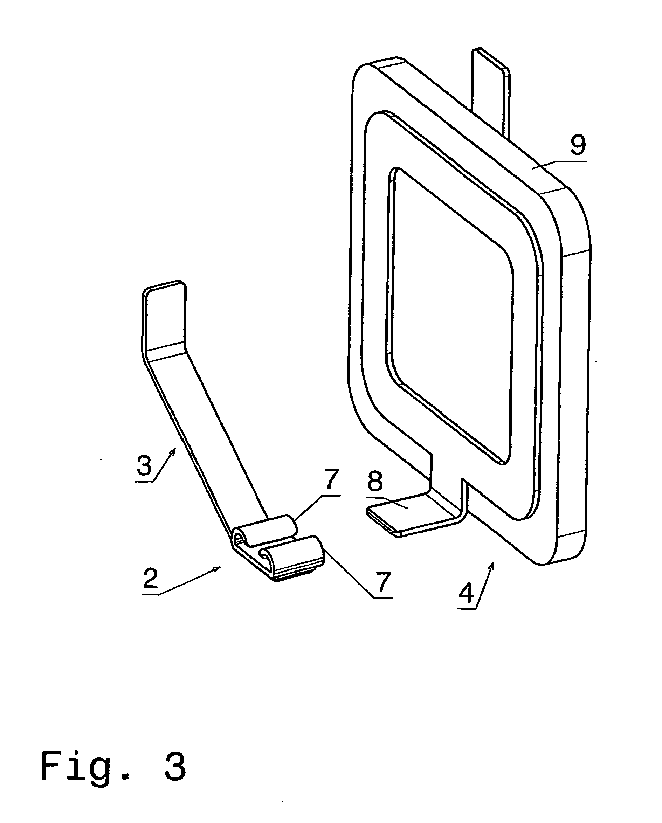

Der Fläche 6 gegenüberliegend sind zwei Crimp- oder Biegeabschnitte 7 ausgeführt, die der Aufnahme einer Kontaktzunge 8 eines z. B. scheibenförmiger Varistors 9 (s. Fig. 3) dienen.

Das Adapterteil 2 kann hinsichtlich der für den Lötprozess optimalen Oberfläche gefertigt und diesbezüglich ausgelegt werden.

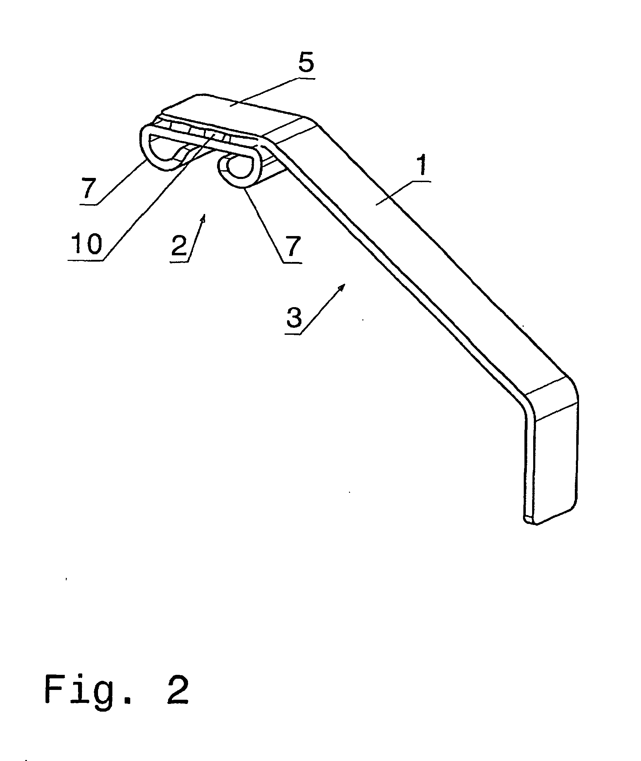

Fig. 2 zeigt, wie sich das Ergebnis der Lötverbindung zwischen dem Adapterteil 2 und dem Abtrennstreifen 1 darstellt. Das Lot ist hier mit dem Bezugszeichen 10 symbolisch gezeigt.

Die verlötete Einheit 3 kann nun als vorgefertigtes Teil gereinigt werden, um Flussmittelreste zu entfernen und steht zur weiteren Verarbeitung zur Verfügung.

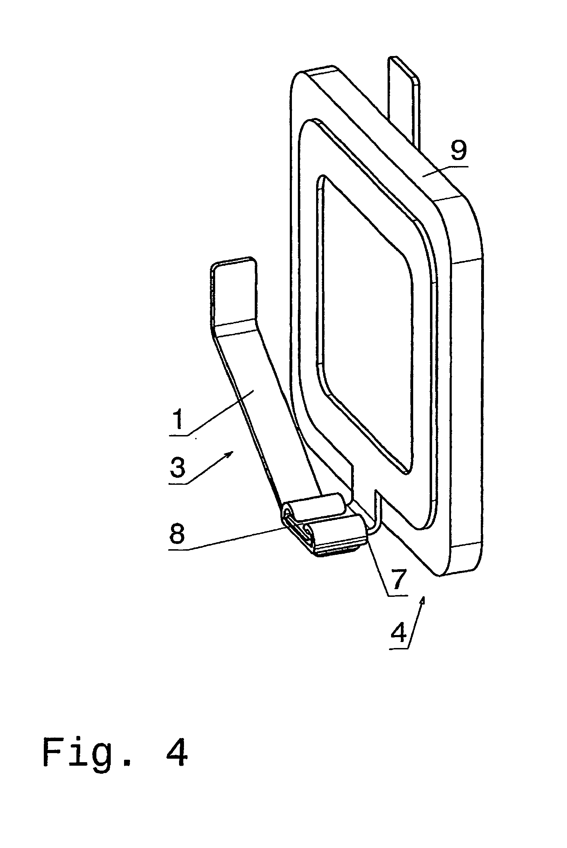

Die Figuren 3 und 4 lassen in ihrer Zusammenschau den mechanischen Kontaktierungs- und Verbindungsschritt zwischen der verlöteten Einheit 3 und der Anschlusszunge 8 des Varistors 9 erkennen. Es entsteht in diesem Schritt eine weitere vormontierte Einheit, die nun bereits den Abtrennstreifen, die thermische Trennstelle und den Varistor umfasst.

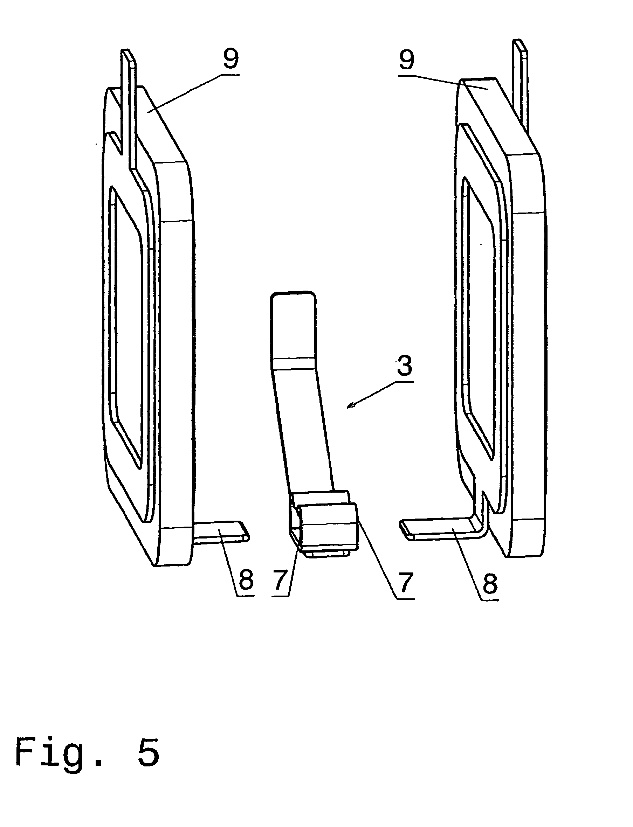

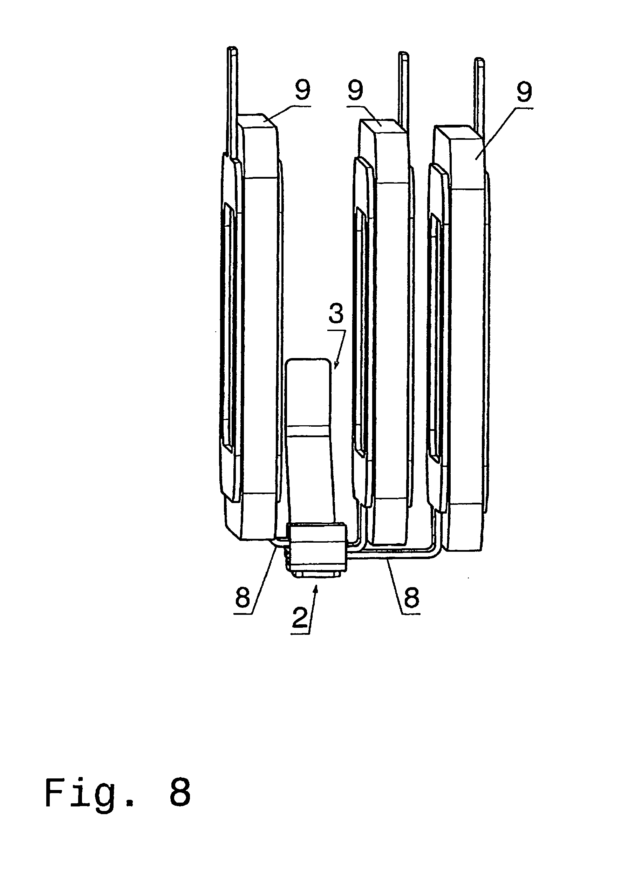

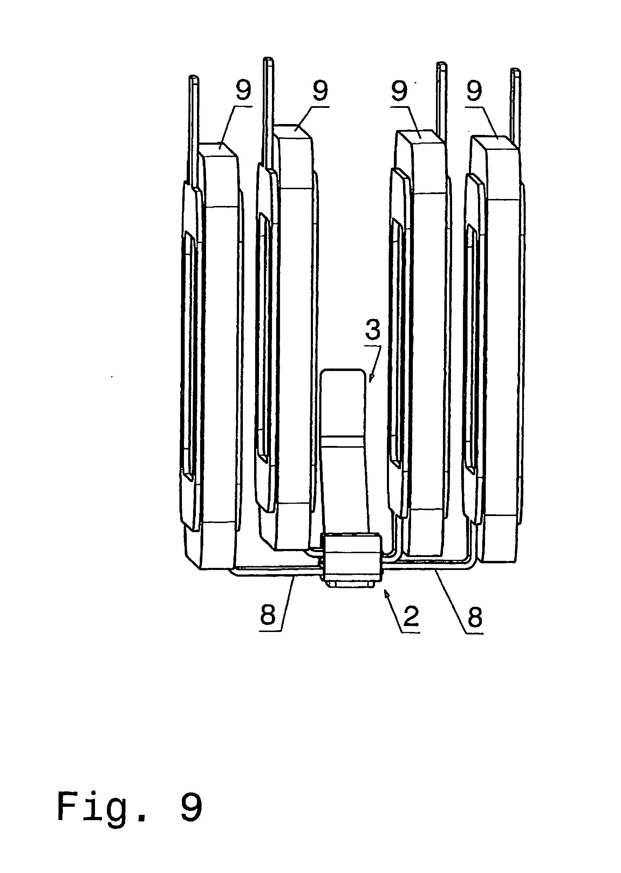

Bei den folgenden Figuren 5 bis 9 wird das voranstehend geschilderte Prinzip der Ausbildung einer stoffschlüssigen Verbindung zwischen Abtrennstreifen 1 und Adapterteil 2 wiederum genutzt, wobei jedoch im Unterschied zu den Darstellungen nach den Figuren 1 bis 4 das Adapterteil über Mehrfachcrimp- oder -biegeabschnitte 7 verfügt, so dass eine Aufnahme mehrerer Anschlussfahnen oder Anschlusszungen 8 entsprechend angeordneter Varistoren 9 erfolgen kann.

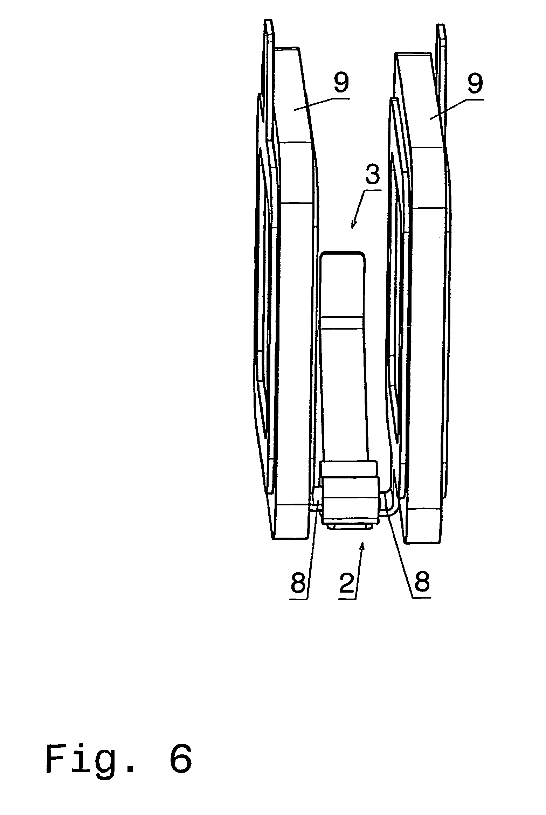

Wie aus der Fig. 5 erkennbar, wird links- und rechtsseitig in die mittig angeordnete verlötete Einheit 3 jeweils eine Anschlusszunge 8 als jeweils Varistor 9 eingeschoben und hierdurch mechanisch verbunden und elektrisch kontaktiert. Im Endzustand ergibt sich eine Anordnung gemäß der Darstellung nach Fig. 6.

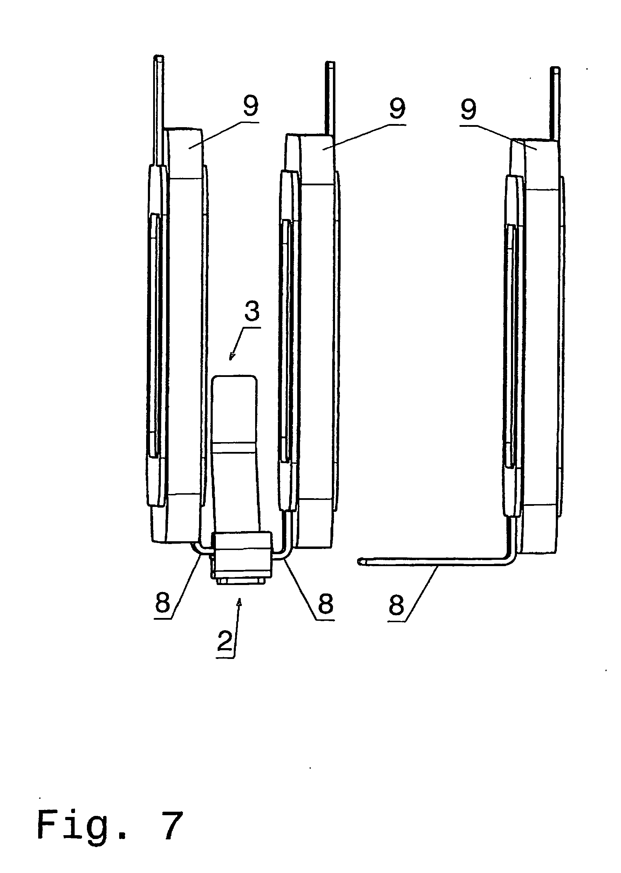

Wenn das Adapterteil entsprechend ausgelegt ist, können wie in den Figuren 7 bis 9 gezeigt, weitere Varistoren mit diesbezüglichen verlängerten Anschlussfahnen oder Anschlusszungen 8 aufgenommen werden, ohne dabei das Grundprinzip der Erfindung zu verlassen.

Dadurch, dass die Einheit 3 separat im Vorfeld der Herstellung eines kompletten Überspannungsableiters nebst Gehäuse fertigstellbar ist, können Löttechniken wie z. B. ein induktives Löten zur Anwendung kommen, die nicht nur hochproduktiv sind, sondern darüber hinaus die Langzeiteigenschaften des Lotmaterials nicht nachteilig beeinflussen.

Zusammenfassend ergeben sich erfindungsgemäß folgende Vorteile.

Das Adapterteil kann von seiner Ausgestaltung her optimal an den jeweiligen Lötprozess angepasst und dementsprechend ausgestaltet werden. Es ergibt sich die Möglichkeit, die eigentliche thermische Abtrennvorrichtung in einem separaten Arbeitsschritt vorzufertigen, wobei ein bezogen auf den Stand der Technik geringerer und immer gleicher, reproduzierbarer Energieeintrag für den Lötprozess gegeben ist. Hierdurch ergibt sich eine weitgehende Automatisierbarkeit des Lötprozesses.

Wie insbesondere aus den Ausführungsbeispielen leicht nachvollziehbar, kann ein hoher Standardisierungsgrad bezogen auf die vorgefertigte Abtrennvorrichtung erreicht werden, was die Lagerhalterung vereinfacht. Verunreinigungen durch Flussmittel, Lotpastenreste oder dergleichen, die sich ansonsten im Finalprodukt, d. h. im endgefertigten Überspannungsschutzmodul und dessen Gehäuse befinden, sind ausgeschlossen, da der Lötprozess außerhalb der Endapplikation realisiert wird.

## Patentansprüche

1. Anordnung zur Ausbildung einer thermischen Trennstelle, bestehend aus einem Abtrennstreifen (1), welcher mit einer Vorspannkraft beaufschlagbar ist, einem thermische Energie erzeugenden, elektrischen Mittel mit einer Kontaktfläche, insbesondere ausgestaltet als Überspannungsschutzelement (9) oder als Bestandteil eines solchen Elements sowie einem, sich bei definierter Erwärmung im Aggregatszustand ändernden, stoffschlüssigen Verbindungsmittel, insbesondere einem Lot (10), **dadurch gekennzeichnet, dass**
zwischen dem Abtrennstreifen (1) und der Kontaktfläche des elektrischen Mittels ein Adapterteil (2) vorhanden ist, wobei das Adapterteil (2) einerseits mit der Kontaktfläche rein form- und/oder kraftschlüssig verbunden ist sowie andererseits stoffschlüssig mit dem Abtrennstreifen (1) in thermisch trennbarer Verbindung steht.

2. Anordnung nach Anspruch 1, **dadurch gekennzeichnet, dass** das Adapterteil (2) aus einem hoch wärmeleitfähigen Material besteht.

3. Anordnung nach Anspruch 1 oder 2, **dadurch gekennzeichnet, dass** das Adapterteil (2) durch Löten mit dem Abtrennsteifen (1) verbunden ist.

4. Anordnung nach einem der vorangegangenen Ansprüche, **dadurch gekennzeichnet, dass** das Adapterteil (2) mindestens einen Crimp- oder Biegeabschnitt (7) aufweist, welcher mindestens eine Anschlussfahne (8) des elektrischen Mittels (9) aufnimmt.

5. Anordnung nach Anspruch 4, **dadurch gekennzeichnet, dass** das Adapterteil (2) als eine Ein- oder Mehrfach-Flachsteckhülse ausgebildet ist.

6. Anordnung nach Anspruch 4 oder 5, **dadurch gekennzeichnet, dass** das Adapterteil (2) einen Stapel elektrisch verbundener Crimp- oder Biegeabschnitte (7) aufweist, wobei auf einer der Stapelflächen der stoffschlüssige Verbindungsbereich ausgebildet ist.

7. Anordnung nach einem der Ansprüche 4 bis 6, **dadurch gekennzeichnet, dass** mindestens zwei in einer Ebene gegenüberliegende Crimp- oder Biegeabschnitte zur beidseitigen Aufnahme je mindestens einer Anschlussfahne des elektrischen Mittels vorgesehen sind.

8. Anordnung nach einem der vorangegangenen Ansprüche, **dadurch gekennzeichnet, dass** das Adapterteil eine bezüglich der Ausbildung der stoffschlüssigen Verbindung mit dem Abtrennstreifen geringere Wärmekapazität besitzt.

9. Verfahren zur Herstellung einer Anordnung zur Ausbildung einer thermischen Trennstelle nach einem der Ansprüche 1 bis 3, **dadurch gekennzeichnet, dass** der Abtrennstreifen (1) mit Adapterteil (2) in einem ersten Arbeitsschritt gefertigt ist und nach Herstellung der stoffschlüssigen Verbindung die form- und/oder kraftschlüssige Verbindung auf mechanische Weise in einem zweiten, getrennten Schritt realisiert wird.

## Claims

1. Arrangement for forming a thermal isolation point, consisting of an isolation strip (1) to which a preloading force can be applied, an electrical means which produces thermal energy and has a contact surface, in particular configured as an overvoltage protection element (9) or as a component of such an element, and a material-closed connection means changing the aggregate state when heated in a defined manner, in particular a solder (10),
**characterized in that**
an adapter part (2) is provided between the isolation strip (1) and the contact surface of the electrical means, wherein the adapter part (2) is, on the one hand, connected to the contact surface in a purely form-closed and/or force-closed manner and, on the other hand, is connected to the isolation strip (1) in a material-closed, thermally disconnectable manner.

2. Arrangement according to claim 1, **characterized in that** the adapter part (2) is formed of a highly heat-conducting material.

3. Arrangement according to claim 1 or 2, **characterized in that** the adapter part (2) is connected to the isolation strip (1) by soldering.

4. Arrangement according to one of the preceding claims, **characterized in that** the adapter part (2) comprises at least one crimped section or bent section (7) which receives at least one connecting lug (8) of the electrical means (9).

5. Arrangement according to claim 4, **characterized in that** the adapter part (2) is formed as a single or multiple female disconnect.

6. Arrangement according to claim 4 or 5, **characterized in that** the adapter part (2) comprises a stack of electrically connected crimped sections or bent sections (7), wherein the material-closed connection region is formed on one of the stack surfaces.

7. Arrangement according to one of claims 4 to 6, **characterized in that** at least two crimped sections or bent sections are provided opposite each other in one plane so as to receive on both sides at least one connecting lug of the electrical means respectively.

8. Arrangement according to one of the preceding claims, **characterized in that** the adapter part has a lower thermal capacity relative to the configuration of the material-closed connection to the isolation strip.

9. Method for producing an arrangement for forming a thermal isolation point according to one of claims 1 to 3, **characterized in that** the isolation strip (1) with the adapter part (2) is fabricated in a first working step, and that, after the production of the material-closed connection, the form-closed and/or force-closed connection is realized in a mechanical manner in a second, separate step.

## Revendications

1. Agencement pour réaliser un emplacement de séparation thermique, constitué d'un ruban séparateur (1), lequel est susceptible d'être sollicité avec une force de précontrainte, d'un moyen électrique engendrant une énergie thermique et doté d'une surface de contact, réalisé en particulier comme élément de protection antisurtension (9) ou comme partie constitutive d'un tel élément, et d'un moyen de liaison par coopération de matières, qui se modifie dans son état structurel lors d'un réchauffement défini, en particulier une brasure (10),
**caractérisé en ce que**
il est prévu une partie adaptatrice (2) entre le ruban séparateur (1) et la surface de contact du moyen électrique, ladite partie adaptatrice (2) étant reliée d'une part à la surface de contact en coopération uniquement de formes et/ou de forces, et étant reliée d'autre part par coopération de matières avec le ruban séparateur (1) par une liaison capable d'être séparée par voie thermique.

2. Agencement selon la revendication 1, **caractérisé en ce que** la partie adaptatrice (2) est en un matériau à haute conductibilité thermique.

3. Agencement selon la revendication 1 ou 2, **caractérisé en ce que** la partie adaptatrice (2) est reliée par brasage avec le ruban séparateur (1).

4. Agencement selon l'une des revendications précédentes, **caractérisé en ce que** la partie adaptatrice (2) comprend au moins un tronçon de sertissage ou de cintrage (7), lequel reçoit au moins une patte de connexion (8) du moyen électrique (9).

5. Agencement selon la revendication 4, **caractérisé en ce que** la partie adaptatrice (2) est réalisé sous forme de douille simple ou multiple pour fiche(s) plate(s).

6. Agencement selon la revendication 4 ou 5, **caractérisé en ce que** la partie adaptatrice (2) comprend un empilement de tronçons de sertissage ou de cintrage (7), reliés sur le plan électrique, dans lequel la zone de liaison par coopération de matières est réalisée sur l'une des surfaces d'empilement.

7. Agencement selon l'une des revendications 4 à 6, **caractérisé en ce qu'**il est prévu au moins deux tronçons de sertissage ou de cintrage, opposés dans un plan, pour recevoir des deux côtés chacun au moins une patte de connexion du moyen électrique.

8. Agencement selon l'une des revendications précédentes, **caractérisé en ce que** la partie adaptatrice possède une capacité thermique plus faible par référence à la réalisation de la liaison par coopération de matières avec le ruban séparateur.

9. Procédé pour la production d'un agencement pour réaliser un emplacement de séparation thermique selon l'une des revendications 1 à 3, **caractérisé en ce que** le ruban séparateur (1) est réalisé avec la partie adaptatrice (2) dans une première passe de travail et, après établissement de la liaison par coopération de matières, on réalise la liaison en coopération de formes et/ou de forces dans une seconde passe séparée, d'une manière mécanique.
